# EUROPEAN PATENT SPECIFICATION

(11) **EP 1 557 655 B1**
(45) Date of publication and mention of the grant of the patent: **20.06.2007**
(21) Application number: 04001594.3
(22) Date of filing: 26.01.2004
(51) Int. Cl.: G01M 1/02, G01M 1/32

(54) **Method and apparatus for balancing a motor vehicle wheel**
Verfahren und Vorrichtung zum Auswuchten eines Fahrzeugrades
Méthode et dispositif pour équilibrer une roue de véhicule

(43) Date of publication of application: 27.07.2005
(73) Proprietor: Snap-on Equipment Srl a unico socio., 42015 Correggio (Reggio Emilia) (IT)
(72) Inventor: Braghiroli, Francesco, 42100 Reggio Emilia (IT)
(74) Representative: Eisenführ, Speiser & Partner

(56) References cited:
- EP-A- 0 358 496
- EP-A- 0 565 320
- US-A- 5 915 274
- US-B1- 6 484 574

## Description

The invention concerns a method for balancing a motor vehicle wheel according to the preamble of claim 1 and an apparatus for balancing a motor vehicle wheel according to the preamble of claim 6.

US-A-5915274 discloses such a method and such an apparatus, wherein the contour features which are relevant for fixing the weights are detected. The detected contour features are compared to stored contours or contour features of a plurality of types of rim or types of wheel, in which respective balancing planes which are suitable for those stored types of rim or types of wheel are predetermined. For the balancing plane or planes determined in that way, the angular position and size of the balancing weight or weights is or are calculated, in dependence on the measurement values obtained in the unbalance measuring operation.

US patent No 6 535 281 B2 discloses such a method and such an apparatus, in which the motor vehicle wheel is scanned with an optical scanning device for the purposes of detecting geometrical wheel data. In calculating the angular position and the size of the balancing weights to be fitted in the balancing planes, the required geometrical wheel data are evaluated.

It is further known from US patent No 6 122 957, when balancing a vehicle wheel, to ascertain the contour of the rim by scanning, and to determine optimum balancing positions for the balancing weights from the contour and the size of the balancing weights from the measurement results of the un-balance measuring operation.

US patent No 5 189 912 discloses determining the wheel type for standardised motor vehicle wheels from the scanned geometry data, and determining the associated axial positions for fitting balancing weights.

The object of the invention is to provide a method and an apparatus of the kind set forth in the opening part of this specification, with which positions suited to an improved representation of types of rim or types of wheel for fixing balancing weights are determined.

That object is attained for the method by the features of claim 1 and for the apparatus by the features of claim 6.

Relevant contour features of the rim of the motor vehicle wheel are in particular flat surface portions, rim surface portions extending in parallel relationship with the axis of the wheel, parts of the rim surface which are adjacent to the wheel disc portion or to the spokes of the motor vehicle wheel, and rim flanges. Those rim surface portions are suitable for fixing balancing weights in position. The at least one balancing plane is disposed within those surface portions, in which respect two balancing planes are determined in those surface portions, when a dynamic balancing procedure is performed. For a static balancing procedure, it is sufficient to determine one balancing plane. Adhesive weights can be fixed in the flat surface portions, in particular surface portions extending in parallel relationship with the axis of the wheel. Clip-type weights can be fixed to the rim flanges.

Particularly in regard to determining the type of rim or the type of wheel, it is also possible to ascertain contour features which are not suitable for fixing balancing weights in place. Contour features of that kind are steps in the rim surface or surface portions, which extend inclinedly or approximately perpendicularly to the axis of the wheel.

In the operation of determining the contour features, the spacings of the respective contour features from a reference plane or a reference point on the balancing machine are determined by the scanning device.

In the operation of determining the type of rim or the type of wheel, it is possible for further parameters, for example the rim material (steel or aluminium), the rim width, the rim diameter and the wheel diameter to be detected by the scanning device. Preferably an optical scanning device is employed, as it known from example from US patent No 6 535 281 B2. Preferably, three optical scanning devices can be used, wherein a respective scanning device is provided for scanning the inside of the wheel and the outside of the wheel, and a scanning device is provided for scanning the wheel peripheral running surface. Preferably, a laser beam is used for the scanning operation.

The optical scanning beam can further serve for marking the balancing positions when the wheel to be balanced is moved into the appropriate angular position, as is known for example from US patent No 6 244 108 B1. In that case, a change in the axial position of one or both balancing planes can be implemented by the optical scanning beam being displaced or pivoted. In that case, the point of impingement of the optical scanning beam lies in the corrected balancing plane. That modification can be effected by the operator. The evaluation device of the balancing machine then re-calculates the angular position and size of the balancing weight, for that new balancing plane. It is possible in that way to provide for optimum positioning of the balancing weight on the surface of the rim.

The data in respect of the detected contour features or the contour of the rim are stored with the geometrical data in respect of the axial position of the at least one associated balancing plane. If for example a set of four vehicle wheels of a motor vehicle is to be balanced, the stored data can be used for the subsequent balancing operations on the motor vehicle wheels of that set. In addition, the stored data can be used for improved representation of the types of rim or wheel. That corresponds to a learning process for the storage and calculating system in the evaluation device. The data stored in that way can be used for balancing further vehicle wheels of the same or a similar type. That learning process is advantageous, particularly in relation to light metal or alloy wheels such as aluminium wheels with a wide range of types.

The invention will now be described in greater detail with reference to the Figures in which:
Figure 1 is a diagrammatic view showing an embodiment of the invention, and
Figure 2 diagrammatically shows various fixing positions for different types of rim or wheel.

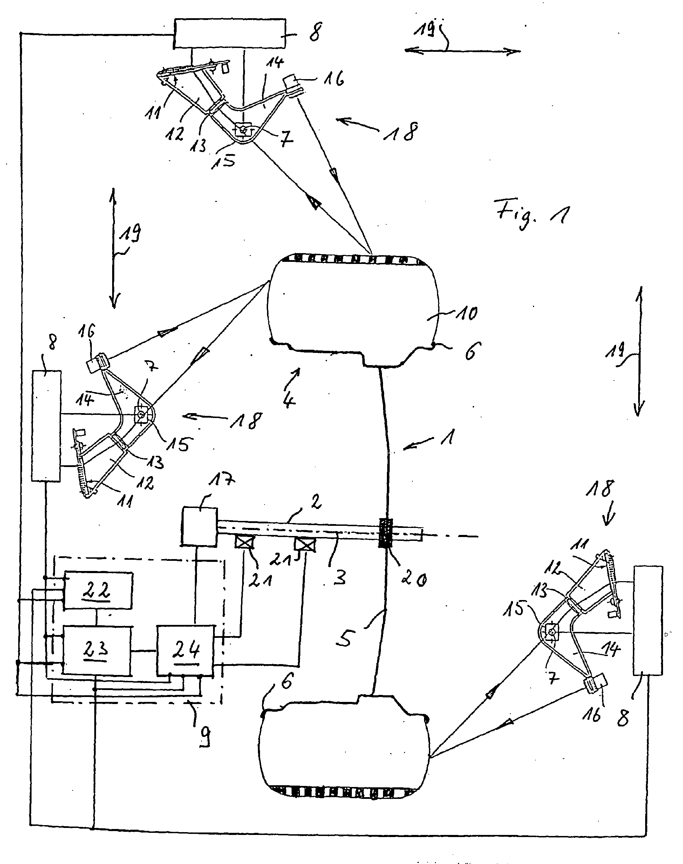

Figure 1 is a diagrammatic view showing a vehicle wheel 1 which in conventional manner has a wheel disc portion 5 and a rim 4 fixed to the periphery of the wheel disc portion 5. A pneumatic tyre 10 is mounted on the rim 4. Tyre beads are supported in known manner at rim flanges 6 of the rim 4.

The vehicle wheel 1 and in particular the motor vehicle wheel is fixed in known manner to a measuring shaft 2 of a wheel balancing machine (not shown in greater detail) and is supported rotatably about an axis of rotation which is defined by the measuring shaft 2 and which, when the wheel is clamped in position in centered relationship, coincides with a wheel axis 3. That guarantees that the wheel axis 3 is arranged stationarily at the wheel balancing machine.

The dimensions and positions of constituent parts of the vehicle wheel 1 can be measured with one or more scanning devices 18 and ascertained with computer aid. Each scanning device includes a light source 16 which is preferably in the form of a laser. In addition each device 18 includes a receiver 12 which preferably has a CCD-sensor as a position-sensitive receiving element. The light source 16 and the receiver 12 are fixed to a carrier 14. The carrier 14 is supported pivotably about a pivot axis 7. The carrier 14 can also be movably mounted linearly (double-headed arrow 19) or on a predetermined guide path with respect to the measuring shaft 2 and a fixing position 20 of the vehicle wheel 1 to the measuring shaft 2. The pivotal movement and the optionally additional linear or guided movement can be implemented by means of a drive (not shown), for example in the form of one or more stepping motors. A receiver optical system 13 is also provided on the carrier 14. The receiver optical system 13 and the CCD-sensor 11 are constituent parts of the receiver 12.

The light source 16 emits a light beam on to the surface of the vehicle wheel 1. From there, the light is reflected in an associated reflected beam and passes through the focusing receiver optical system 13 on to the sensor elements of the CCD-sensor 11. The CCD-sensor 11 can detect a plurality of local maxima of an illumination intensity function, separately from each other. The direction of the reflected beam depends on the distance of the location scanned on the vehicle wheel 1, with respect to the light source 16. In dependence on that distance, the reflected beam is directed by way of the receiver optical system 13 on to a given location of the CCD-sensor 11 and then converted into a position-sensitive or position-dependent signal. That signal is passed to an electronic measuring arrangement 8 which is further connected to a position sender 15. The position sender 15 supplies the electronic measuring arrangement 8 with position signals which are proportional to the respective positions of the light source 16 and the CCD-sensor 11. The light source 16 and the receiver 12 are movable synchronously with each other as they are fixed to the common carrier 14. The position signals are related to a reference position present on the machine (the machine is not shown) and are thus related to the measuring shaft 2 mounted stationarily at the machine and the axial fixing position 20 at which the vehicle wheel 1 is fixed to the measuring shaft 2.

The electronic measuring arrangement 8 produces measurement signals which correspond to the positions of the surface locations of the motor vehicle wheel 1, which are scanned by the light beams emitted by the light source 16.

All surface points of the motor vehicle wheel 1 and in particular all surface points on the wheel disc portion 5 and the rim 4 can be detected by means of three scanning devices 18 which are associated with the inside of the motor vehicle wheel (left-hand scanning device 18 in the Figure) and the outside of the vehicle wheel 1 (right-hand scanning device 18 in the Figure).

Suitable scanning devices 18 are known from EP 1 174 698 A2 (= US patent No 6 535 281). It is however also possible to use only one scanning device 18 which can be moved into suitable measuring positions on a predetermined guide path both at the inside and at the outside of the vehicle wheel 1.

In order to detect all surface spots of the vehicle wheel 1 it can be mounted rotatably about the wheel axle 3 with the measuring shaft 2. The electronic measuring arrangement 8 which furnishes the corresponding measurement signals can be a constituent part of the respective scanning device 18. It is however also possible for the electronic measuring arrangement 8 to be integrated into an evaluation device 9 which includes a computer 24. By virtue of the described measuring arrangement, dimensions and positions of constituent parts of the vehicle wheel 1 as well as properties of those constituent parts can be determined and evaluated by the evaluation device 9 in a computer-aided procedure.

By means of the described measuring arrangement, it is possible to communicate to the evaluation device 9 positional data in respect of locations scanned at the surface of the rim 4, from which the profile at the rim surface 4 can be determined. The profile of the rim affords the locations at which balancing weights, for example adhesive weights, are to be arranged when balancing the vehicle wheel 1. In that respect, the rim surface is preferably scanned at the inside of the wheel, by the scanning device 18, as is diagrammatically shown by the left-hand scanning device 18 illustrated in Figure 1. The rim contour can also be scanned at the outside of the wheel, in the same manner.

It is also possible to scan the shapes of the rim flanges 6. The respective scanning device 18 is suitably positioned for that purpose and the light beam emitted by the light source is directed from different directions on to the respective rim flange. The profile or the shape of the rim flange can then be detected by pivotal movement and optionally straight movement, or movement guided in some other fashion, of the scanning device 18. The shape of the rim flange also affords a reference to the vehicle manufacturer. The service operator can then obtain indications in regard to the choice of the balancing weights to be used, from the corresponding data bank.

It is also possible to measure the thickness of the wheel disc portion 5. For that purpose, the surface of the disc wheel portion 5 is scanned at the outside and at respective, preferably oppositely disposed locations of the inside, as is shown diagrammatically by the broken-line illustrations of the emitted and associated reflected beams in the Figure. The thickness of the wheel disc portion 5 can be ascertained in the evaluation device 9 from the two items of information in respect of the positions of the mutually opposite surface locations which are sensed at the outside and the inside of the vehicle wheel 1.

The wheel type can be determined from the measured geometrical data in respect of the wheel disc portion 5 and the rim 6, and from the ascertained form of the rim flanges 6. The procedure provides for example information as to whether the wheel involves a disc wheel and has a rim of steel or of light metal, for example aluminium.

The operation of detecting the rotary angular positions of the vehicle wheel 1 is effected in conjunction with rotary angle signals which are delivered to the evaluation device 9 by a rotary angle sender 17 coupled to the measuring shaft 2. It is known for a rotary angle sender of that kind to be connected to the measuring shaft 2 in a wheel balancing machine.

Preferably the scanning device 18 which serves to scan the inside of the vehicle wheel is mounted pivotably to the machine frame of the balancing machine (not shown), as is known for example from EP 1 174 698 A2 (= US No 6 535 281 B2). The scanning device 18 for scanning the outside of the vehicle wheel 1 (the right-hand scanning device 18 in the Figure) can be provided on a pivotable frame, in particular on a wheel guard hood (not shown) which is provided in known manner in a wheel balancing machine. Preferably that scanning device 18 is mounted pivotably. It can also be mounted to the pivotable frame or the wheel guard hood displaceably linearly (double-headed arrow 19).

The scanned geometrical data which determine the overall contour or relevant contour features of the rim are passed to a comparator 23 in the evaluation device 9. The evaluation device 9 further includes a memory 22 in which contour features or contours of different types of rim or types of wheel are stored. Axial positions or positional regions of associated balancing planes are associated with those stored contour features or contours, and can also be contained in the memory 22.

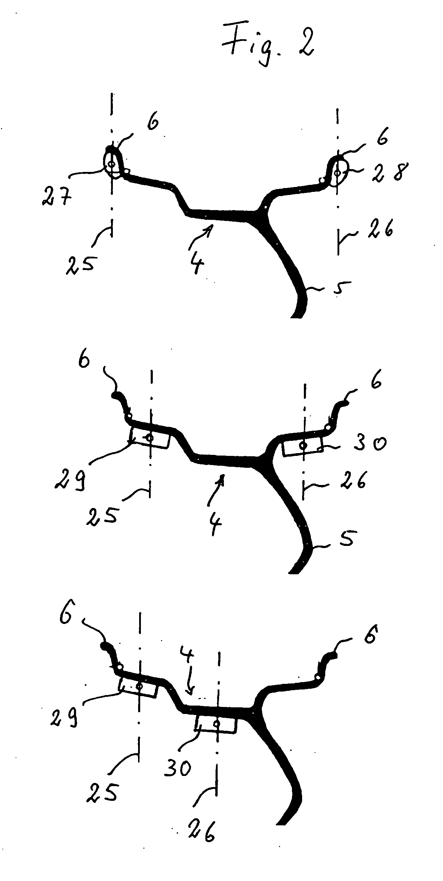

Figure 2 illustrates three different types of rim and the various associated balancing planes 25, 26. For the sake of simplicity the rims are diagrammatically shown as involving the same profile representation. The type of rim which is illustrated at the top in Figure 2 involves for example a steel rim or also a light metal or alloy wheel in which the rim flanges 6 are so designed that clip-type weights 27, 28 can be fixed thereto.

The wheel which is shown at the centre and at the bottom in Figure 2 involves light metal or alloy rims, in particular aluminium rims. Those types of rim have surface regions which are arranged around the axis of the wheel and in which adhesive weights 29, 30 can be disposed in balancing planes 25, 26. The balancing planes 25, 26 are also stored in the memory 22, for these types of rim. The surface regions in which the adhesive weights 29, 30 can be fixed are disposed in substantially parallel relationship with the axis 3 of the wheel or are only slightly inclined with respect to the axis 3. In addition, surface regions in which the balancing planes 26 occur are disposed at the outside or inside directly adjacent to the wheel disc portion 5 or the spokes provided at that location. For the comparison procedure, at least the relevant contour features, that is to say the surface portions of the rim, in which the balancing weights can be arranged, are captured in the memory 22 and compared to the appropriate relevant contour features of the vehicle wheel to be balanced. The inwardly disposed (left-hand) scanning device 18 and the outwardly disposed (right-hand) scanning device 18 can be used to determine the thickness of the rim material, the rim width, the rim diameter and the wheel diameter, as further parameters for determining the type of rim or wheel. Those parameters can also be stored in association with the types of wheel or rim in the memory.

Comparison of the contours or the relevant contour features is effected in the comparator 23, for example on the basis of pattern matching techniques.

For example the best match pattern can be chosen as the pattern that minimises a weighted sum of the distances of each feature in the current pattern with the corresponding feature in the pre-established stored pattern. The distance or metric function to be used can be the Euclidean distance, the absolute difference distance, the maximum distance and so on. Other pattern matching techniques are known from literature.

The matching procedure can be performed in an iterative way. For example, rim contours only can be compared first and a subset of candidates of best match stored patterns can be selected. This subset is compared again with respect to typical rim parameters to pick the final best match.

Another option is to compare one portion of the rim contour first (the rim flange for example) and select a subset of candidates of best match stored patterns based on that. Other portions are compared then only for the patterns in the subset to pick the best match. This would save time in the pattern matching procedure.

That procedure provides for determining two balancing planes in which the balancing weights are to be fixed. On the basis of the forces measured by the force measuring senders 21 during an unbalance measuring operation, and the associated rotary angle positions which are determined with the rotary angle sender 17, the angular positions and sizes of the balancing weights are calculated in the computer 24 of the evaluation device 9. For that purpose the computer 24 is connected to the comparison device 23, the rotary angle sender 17 and the force measuring senders 21.

Particularly when dealing with types of rim with which adhesive weights are used (central and lower rim in Figure 2), the fixing location for the balancing weight can be identified on the rim surfaces by means of the light beam, in particular the laser beam, which is emitted by the light source 16 of the inner or the outer scanning device 18, when the motor vehicle wheel 1 is moved into the appropriate rotary angular balancing position. That marking procedure can be implemented for example in such a way as is known from US patent No 6 244 108 B1.

There is also the possibility of the axial position of the respective balancing plane 25 or 26 being altered by the service operator. In that way, the impingement point of the light beam which is directed on to the rim surface is displaced into the desired position and that change in position is notified to the computer 24. The computer then determines, for the modified balancing plane, the associated angular position and the size of the balancing weight, in particular an adhesive weight 29 or 30.

That modified axial position of the balancing plane and the associated geometrical data in respect of the rim 4 and optionally the additional parameters of the vehicle wheel 1 are inputted into and stored in the memory 22. If wheels of the same type are subsequently balanced, for example a set of wheels for a motor vehicle, the stored data can be used to establish the balancing planes. In addition, those data can be stored in conjunction with a learning process, thereby providing for refinement and differentiated division of the various types of rim and wheel whose geometrical data are stored in the memory 22, with associated balancing planes. The functions of the memory, the comparator and the computer can also be integrated in a computing unit of the evaluation device 9.

### [List of references]

- 1: vehicle wheel
- 2: measuring shaft
- 3: wheel axis
- 4: rim
- 5: wheel disc portion
- 6: rim flange
- 7: pivot axis
- 8: electronic measuring arrangement
- 9: electronic evaluation device
- 10: pneumatic tyre
- 11: CCD-sensor
- 12: receiver
- 13: receiver optical system
- 14: carrier
- 15: position sender
- 16: light source
- 17: rotary angle sender
- 18: scanning device
- 19: evaluation device
- 20: linear guide direction
- 21: force measuring sender
- 22: memory
- 23: comparator
- 24: computer
- 25, 26: balancing planes
- 27, 28: clip-type weights
- 29, 30: adhesive weights

## Claims

1. A method of balancing a motor vehicle wheel, in which after an unbalance measuring operation at least one balancing weight is fixed in at least one associated balancing plane in a given angular position to the rim of the motor vehicle wheel, wherein the following steps are performed to determine the at least one balancing plane and the size and angular position of the balancing weight:
- of the rim surface of the motor vehicle wheel to be balanced, to which surface the at least one balancing weight is to be fixed, at least the contour features which are relevant for weight fixing purposes are detected;
- the detected contour features are compared to stored contours or contour features in respect of the rim surface provided for the balancing effect of a plurality of types of rim or types of wheel in respect of which at least one respective balancing plane is predetermined;
- the comparison operation provides for determining the at least one balancing plane of the type of rim or type of wheel which has the respective best match with the detected contour or the detected contour features of the rim surface of the motor vehicle wheel to be balanced; and
- the angular position and size of the at least one balancing weight for the determined balancing plane are calculated with evaluation of the measurement values obtained in the unbalance measuring operation,
**characterised**
- **in that** for altering the axial position of at least one balancing plane an optical scanning beam of the scanning device is directed on to the rim surface for marking the altered axial position, wherein that alteration in position is taken into account when calculating the angular position and the size of the at least one balancing weight to be used in the altered balancing plane, and
- **in that** the data of the altered axial position of the at least one balancing plane and the associated data in respect of the detected contour features and/or the contour of the rim surface provided for the balancing effect of the motor vehicle wheel are stored.

2. A method according to claim 1 **characterised in that** at least one of the following features is detected as relevant contour features: rim flanges, flat surface portion of the rim, a rim surface extending in parallel relationship with the axis of the wheel, or a rim surface adjacent to the wheel disc portion or the wheel spokes.

3. A method according to claim 1 or claim 2 **characterised in that** at least one of the following parameters is further detected for determining the type of rim or type of wheel: rim material, rim width, rim diameter or wheel diameter.

4. A method according to one of claims1 to 3 **characterised in that** the rim contour is scanned stepwise by means of an optical scanning measuring procedure and the rim contour is determined from the measurement values.

5. A method according to claim 1 **characterised in that** the stored data are used for balancing further vehicle wheels of the same or similar type.

6. Apparatus for balancing a motor vehicle wheel including:
- a measuring shaft (2) on which a motor vehicle wheel (1) to be balanced is concentrically fixed;
- a measuring device (17, 21) with which forces resulting from an unbalance of the vehicle wheel are measured;
- an optical scanning device (18) with which geometrical data in respect of the vehicle wheel are scanned; and
- an evaluation device (9) connected to the scanning device (18) and the measuring device (17, 21), wherein
- the evaluation device includes:
- a memory (22) in which contour features or contours in respect of different types of rim or wheel and axial positions or positional regions of associated balancing planes (25, 26) are stored;
- a comparator (23) which compares the geometrical data detected by the scanning device (18) in respect of contour features or the contour of the rim or the vehicle wheel to the stored contour features or contours and ascertains the axial position of at least one balancing plane of the associated type of rim or wheel which has the best match in respect of the stored contour features or contour; and
- a computing device (24) which is connected to the comparator (23) and the measuring device (17, 21) and which calculates the angular position and the size of at least one balancing weight in the ascertained balancing plane,
**characterised**
- **in that** the optical scanning device (18) is configured for altering the axial position of at least one balancing plane, wherein an optical scanning beam of the scanning device is directed on the rim surface for marking the altered axial position,
- **in that** the computing device (24) is configured to take into account that alteration in position of the at least one balancing plane when calculating the angular position and the size of the at least one balancing weight to be used in the altered balancing plane, and
- **in that** the memory (22) is configured to store the data of the altered axial position of the at least one balancing plane and the associated date in respect of the detected contour features and/or the contour of the rim surface provided for the balancing effect of the motor vehicle wheel (1).

## Patentansprüche

1. Verfahren zum Auswuchten eines Kraftfahrzeugrades, bei dem nach einem Unwuchtmessvorgang in wenigstens einer zugeordneten Ausgleichsebene wenigstens ein Ausgleichsgewicht in einer bestimmten Winkellage an der Felge des Kraftfahrzeugrades befestigt wird, wobei zur Bestimmung der wenigstens einen Ausgleichsebene und der Größe und Winkellage des Unwuchtausgleichsgewichts folgende Schritte durchgeführt werden:
- von der Felgenoberfläche des auszuwuchtenden Kraftfahrzeugrades, an welcher das wenigstens eine Unwuchtausgleichsgewichts zu befestigen ist, werden zumindest die für die Gewichtebefestigung relevanten Konturmerkmale erfasst;
- die erfassten Konturmerkmale werden mit gespeicherten Konturen oder Konturmerkmalen der für den Unwuchtausgleich vorgesehenen Felgenoberflächen von mehreren Felgentypen oder Radtypen, bei denen zumindest jeweils eine Ausgleichsebene vorgegeben ist, verglichen;
- aus dem Vergleich wird die wenigstens eine Ausgleichsebene des Felgentyps oder Radtyps bestimmt, welcher die jeweils beste Übereinstimmung mit der erfassten Kontur oder den erfassten Konturmerkmalen der Felgenoberfläche des auszuwuchtenden Kraftfahrzeugrades aufweist;
- die Winkellage und Größe des wenigstens einen Unwuchtausgleichsgewichts für die bestimmte Ausgleichsebene werden unter Auswertung der beim Unwuchtmessvorgang erhaltenen Messwerte berechnet,
**dadurch gekennzeichnet**
- **dass** zur Änderung der axialen Position wenigstens einer Ausgleichsebene ein optischer Abtaststrahl der Abtasteinrichtung zur Markierung der geänderten axialen Position auf die Felgenoberfläche gerichtet wird, wobei diese Positionsänderung bei der Berechnung der Winkellage und der Größe des wenigstens einen in der geänderten Ausgleichsebene einzusetzenden Unwuchtausgleichsgewichtes berücksichtigt wird; und
- **dass** die Daten der geänderten axialen Position der wenigstens einen Ausgleichsebene und die zugeordneten Daten bezüglich der erfassten Konturmerkmale und/oder der Kontur der für den Unwuchtausgleich vorgesehenen Felgenoberfläche des Kraftfahrzeugrades gespeichert werden.

2. Verfahren nach Anspruch 1, **dadurch gekennzeichnet, dass** als relevante Konturmerkmale wenigstens eines der folgenden Merkmale erfasst wird: Felgenhörner, flacher Oberflächenteil der Felge, zur Radachse parallel verlaufende Felgenoberfläche, dem Scheibenrad oder den Radspeichen benachbarte Felgenoberfläche.

3. Verfahren nach Anspruch 1 oder 2, **dadurch gekennzeichnet, dass** zur Bestimmung des Felgentyps oder des Radtyps ferner wenigstens einer der folgenden Parameter erfasst wird: Felgenmaterial, Felgenbreite, Felgendurchmesser, Raddurchmesser.

4. Verfahren nach einem der Ansprüche 1 bis 3, **dadurch gekennzeichnet, dass** die Felgenkontur mittels einer optischen Abtastmessung schrittweise abgetastet und aus den Messwerten die Felgenkontur bestimmt wird.

5. Verfahren nach Anspruch 1, **dadurch gekennzeichnet, dass** die gespeicherten Daten zum Auswuchten weiterer Fahrzeugräder vom gleichen oder ähnlichen Typ verwendet werden.

6. Vorrichtung zum Auswuchten eines Kraftfahrzeugrades enthaltend:
- eine Messwelle (2), auf welcher ein auszuwuchtendes Kraftfahrzeugrad (1) konzentrisch befestigt wird;
- eine Messeinrichtung (17, 21), mit welcher aus einer Unwucht des Fahrzeugrades resultierende Kräfte gemessen werden;
- eine optische Abtasteinrichtung (18), mit welcher geometrische Daten des Fahrzeugrades abgetastet werden; und
- einer an die Abtasteinrichtung (18) und die Messeinrichtung (17, 21) angeschlossenen Auswerteeinrichtung (9), wobei
- die Auswerteeinrichtung enthält:
- einen Speicher (22), in welchem Konturmerkmale oder Konturen unterschiedlicher Felgentypen oder Radtypen und axiale Positionen oder Positionsbereiche zugehöriger Ausgleichsebenen (25, 26) gespeichert sind;
- einen Komparator (23), welcher die von der Abtasteinrichtung (18) erfassten geometrischen Daten von Konturmerkmalen oder der Kontur der Felge oder des Fahrzeugrades mit den gespeicherten Konturmerkmalen oder Konturen vergleicht und die axiale Position wenigstens einer Ausgleichsebene des zugehörigen Felgentyps oder Radtyps, der die größte Übereinstimmung bei den gespeicherten Konturmerkmalen oder der Kontur aufweist, ermittelt; und
- eine an den Komparator (23) und die Messeinrichtung (17, 21) angeschlossene Rechnereinrichtung (24), welche die Winkellage und die Größe wenigstens eines Unwuchtausgleichsgewichts in der ermittelten Ausgleichsebene berechnet,
**dadurch gekennzeichnet**
- **dass** die optische Abtasteinrichtung (18) ausgebildet ist zur Änderung der axialen Position wenigstens einer Ausgleichsebene, wobei ein optischer Abtaststrahl der Abtasteinrichtung zur Markierung der geänderten axialen Position auf die Felgenoberfläche gerichtet wird,
- **dass** die Rechnereinrichtung (24) ausgebildet ist, diese Positionsänderung der wenigstens einen Ausgleichsebene bei der Berechnung der Winkellage und der Größe des wenigstens einen in der geänderten Ausgleichsebene einzusetzenden Unwuchtausgleichsgewichte zu berücksichtigen, und
- **dass** der Speicher ausgebildet ist, die Daten der geänderten axialen Position der wenigstens einen Ausgleichsebene und der zugeordneten Daten bezüglich der erfassten Konturmerkmale und/oder der Kontur der für den Unwuchtausgleich vorgesehenen Felgenoberfläche des Kraftfahrzeugrades zu speichern.

## Revendications

1. Procédé d'équilibrage d'une roue de véhicule, dans lequel, après une opération de mesure de balourd, au moins une masselotte d'équilibrage est fixée dans au moins un plan associé d'équilibrage dans une position angulaire donnée sur la jante de la roue de véhicule, les étapes suivantes étant exécutées pour déterminer ledit au moins un plan d'équilibrage et la dimension et la position angulaire de la masselotte d'équilibrage :
- de la surface de la jante de la roue de véhicule devant être équilibrée, surface sur laquelle ladite au moins une masselotte d'équilibrage doit être fixée, on détecte au moins les caractéristiques de profil qui sont déterminantes pour la fixation de la masselotte d'équilibrage ;
- on compare les caractéristiques détectées de profil aux profils enregistrés ou aux caractéristiques enregistrées de profil relatives à la surface de la jante fournies pour l'effet d'équilibrage d'une pluralité de types de jante ou de type de roue par rapport à quoi au moins un plan respectif d'équilibrage est déterminé à l'avance ;
- l'opération de comparaison assure la détermination dudit au moins un plan d'équilibrage du type de jante ou du type de roue qui correspond respectivement le mieux au profil détecté ou aux caractéristiques détectées de profil de la surface de la jante de la roue de véhicule devant être équilibrée : et
- on calcule la position angulaire et la dimension de ladite au moins une masselotte d'équilibrage pour le plan déterminé d'équilibrage en évaluant les valeurs de mesure obtenues lors de l'opération de mesure de balourd,
**caractérisé**
- **en ce que**, pour modifier la position axiale d'au moins un plan d'équilibrage, on dirige un faisceau de balayage optique du dispositif de balayage sur la surface de la jante pour repérer la position axiale modifiée, cette modification de la position étant prise en compte lors du calcul de la position angulaire et de la dimension de ladite au moins une masselotte d'équilibrage à utiliser dans le plan modifié d'équilibrage, et
- **en ce que** l'on enregistre les données de la position axiale modifiée dudit au moins un plan d'équilibrage et les données associées relatives aux caractéristiques détectées de profil et/ou au profil de la surface de la jante fournies pour l'effet d'équilibrage de la roue de véhicule.

2. Procédé selon la revendication 1, **caractérisé en ce que** au moins l'une des caractéristiques suivantes est détectée comme une caractéristique déterminante de profil : les joues de jante, la partie de surface plate de la jante, une surface de jante s'étendant parallèlement à l'axe de la roue ou une surface de jante voisine de la partie d'enjoliveur de roue ou des rayons de roue.

3. Procédé selon la revendication 1 ou 2, **caractérisé en ce que** au moins l'un des paramètres suivants est en outre détecté pour déterminer le type de jante ou le type de roue: le matériau de la jante, la largeur de la jante, le diamètre de la jante, ou le diamètre de la roue.

4. Procédé selon l'une quelconque des revendications 1 à 3, **caractérisé en ce que** le profil de la jante est balayé pas à pas au moyen d'une procédure de mesure par balayage optique et le profil de la jante est déterminé à partir des valeurs de mesure.

5. Procédé selon la revendication 1, **caractérisé en ce que** les données enregistrées sont utilisées pour équilibrer d'autres roues de véhicule du même type ou d'un type similaire.

6. Dispositif d'équilibrage pour une roue de véhicule comprenant :
- un arbre (2) mesureur sur lequel une roue (1) de véhicule devant être équilibrée est fixée de manière concentrique ;
- un dispositif (17, 21) de mesure, par lequel des forces provenant d'un balourd de la roue de véhicule sont mesurées ;
- un dispositif (18) de balayage optique, par lequel des données géométriques se rapportant à la roue de véhicule sont balayées ; et
- un dispositif (9) d'évaluation, raccordé au dispositif (18) de balayage et au dispositif (17, 21) de mesure, dans lequel
- le dispositif d'évaluation comprend :
- une mémoire (22) dans laquelle les caractéristiques de profil ou les profils concernant les différents types de jante ou de roue et les positions axiales ou les régions de positionnement des plans (25, 26) associés d'équilibrage sont enregistrées ;
- un comparateur (23) qui compare les données géométriques détectées par le dispositif (18) de balayage relatives aux caractéristiques de profil ou au profil de la jante ou de la roue de véhicule aux caractéristiques enregistrées de profil ou aux profils enregistrés et identifie la position axiale d'au moins un plan d'équilibrage du type associé de jante ou de roue qui correspond le mieux aux caractéristiques enregistrées de profil ou au profil enregistré : et
- un dispositif (24) de calcul, qui est raccordé au comparateur (23) et au dispositif (17, 21) de mesure et qui calcule la position angulaire et la dimension d'au moins une masselotte dans le plan identifié d'équilibrage,
**caractérisé**
- **en ce que** le dispositif (18) de balayage optique est configuré de manière à modifier la position axiale d'au moins un plan d'équilibrage, un faisceau de balayage optique du dispositif de balayage étant dirigé sur la surface de la jante pour repérer la position axiale modifiée,
- **en ce que** le dispositif (24) de calcul est configuré de manière à prendre en compte cette modification de la position d'au moins un plan d'équilibrage lors du calcul de la position angulaire et de la dimension de ladite au moins une masselotte d'équilibrage à utiliser dans le plan modifié d'équilibrage, et
- **en ce que** la mémoire (22) est configurée de manière à stocker les données de la position axiale modifiée dudit au moins un plan d'équilibrage et les données associées relatives aux caractéristiques détectées de profil et/ou au profil de la surface de la jante fournies pour l'effet d'équilibrage de la roue (1) de véhicule.
